(19) Europäisches Patentamt
European Patent Office
Office européen des brevets

(11) **EP 4 116 113 B1**

(12) **EUROPEAN PATENT SPECIFICATION**

(45) Date of publication and mention
of the grant of the patent:
**03.04.2024 Bulletin 2024/14**

(21) Application number: **22177470.6**

(22) Date of filing: **07.06.2022**

(51) International Patent Classification (IPC):
**B60C 15/06** (2006.01)     **B60C 1/00** (2006.01)
**C08K 3/04** (2006.01)     **C08L 7/00** (2006.01)
**C08L 17/00** (2006.01)

(52) Cooperative Patent Classification (CPC):
(C-Sets available)
**B60C 15/0607; C08K 3/04; C08L 7/00;**
B60C 2001/0058; B60C 2200/06     (Cont.)

(54) **HEAVY DUTY TIRE**

SCHWERLASTREIFEN

PNEU POIDS LOURD

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.07.2021 JP 2021112767**

(43) Date of publication of application:
**11.01.2023 Bulletin 2023/02**

(73) Proprietor: **Sumitomo Rubber Industries, Ltd.
Kobe-shi, Hyogo 651-0072 (JP)**

(72) Inventor: **HIMEDA, Shingo
Kobe-shi,, 651-0072 (JP)**

(74) Representative: **TBK
Bavariaring 4-6
80336 München (DE)**

(56) References cited:
EP-A2- 0 251 145     JP-A- 2009 269 961
JP-A- 2019 026 758     JP-B1- 6 881 627
US-A1- 2006 196 591     US-A1- 2021 061 013

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 7/00, C08L 9/00, C08L 17/00, C08L 91/00,
C08K 3/04, C08K 5/3437, C08K 5/09, C08K 3/22,
C08K 3/06, C08K 5/47;
C08L 7/00, C08L 9/06, C08L 17/00, C08L 61/06,
C08L 91/00, C08K 3/04, C08K 5/3437, C08K 5/09,
C08K 3/22, C08K 3/06, C08K 5/47, C08K 5/31;
C08L 7/00, C08L 9/06, C08L 17/00, C08L 61/06,
C08L 91/00, C08K 3/04, C08K 5/3437, C08K 5/09,
C08K 3/22, C08K 3/06, C08K 5/47, C08K 5/3477;**

**C08L 7/00, C08L 9/06, C08L 17/00, C08L 91/00,
C08K 3/04, C08K 5/3437, C08K 5/09, C08K 3/22,
C08K 3/06, C08K 5/47;
C08L 7/00, C08L 17/00, C08L 91/00, C08K 3/04,
C08K 5/3437, C08K 5/09, C08K 3/22, C08K 3/06,
C08K 5/47**

**Description**

TECHNICAL FIELD

The present invention relates to a heavy duty tire.

BACKGROUND ART

Heavy duty tires, like other tires, require a variety of properties, especially durability.

SUMMARY OF INVENTION

TECHNICAL PROBLEM

The present invention aims to solve the above problem and provide a highly durable heavy duty tire.

US 2006/196591 A1 relates to a heavy duty tire, which comprises a bead core disposed in each bead portion, and a carcass ply of steel cords extending between the bead portions, wherein the edges of the carcass ply are winded around the bead cores from the axially inside to outside of the tire to form a pair of winded portions and a main portion therebetween, the winded portion around the bead core comprises an axially inwardly extending turnback part above the bead core, and a base part under the bead core, and the base part is curved concavely so as to form a space between the base part and the bead core, and an anchor rubber having a complex elastic modulus of from 20 to 80 MPa is disposed in the space to tightly pinch the carcass cords between the anchor rubber and the bead seat of the wheel rim.

EP 0 251 145 A2 relates to a heavy-duty pneumatic radial tire with a radial structure having at least two reinforcing layers provided on the outside of a turnup portion formed by turning up the end of a carcass ply about a bead core from the inside of the tire towards the outside of the tire, wherein a rubber stock is provided in the inside of the outer reinforcing layer so as to cover the end of said turnup portion and the end of the innermost reinforcing layer and wherein the rubber stock contains a cobalt salt in an amount of 0.l to 0.4 parts by weight per l00 parts by weight of rubber in terms of cobalt element and having the dynamic modulus $M_2$ higher than the dynamic modulus $M_1$ of coat rubber of the carcass ply and in the range of from l0 to l5 MPa and a thickness d, defined as a distance from the inside surface of the outer reinforcing layer to the end of the turnup portion, l.0 to 4.0 times larger than the diameter $r_2$ of the reinforcing cord constituting the innermost reinforcing layer.

US 2021/061013 A1 relates to a pneumatic tire comprising a bead portion provided with an inside bead apex rubber disposed between a turned up portion and a main portion of a carcass ply, and an outside bead apex rubber disposed axially outside the turned up portion and having a radially outer edge; and a the sidewall portion provided with a sidewall reinforcing cord layer disposed axially outside the carcass and having a radially inner edge which is spaced apart from the radially outer edge of the outside bead apex rubber by a radial distance of not less than 5% of a tire section height.

JP 6 881 627 B1 relates to a tire, which includes sidewalls each formed from a rubber composition containing a modified rubber crumb and having elongation at break at 23°C of 500% or more, and satisfies a following formula (1): (cross-section height)/(cross-section width)×100≥50%.

JP 2019-026758 A relates to a rubber composition for tire using recycled rubber, wherein 30 pts.mass to 70 pts.mass of carbon black having nitrogen adsorption specific area of 30 $m^2$/g to 80 $m^2$/g, 5 pts.mass to 25 pts.mass of a powder recycled rubber, 5 pts.mass to 25 pts.mass of a modified recycled rubber functionalized by a thiuram sulfide compound are blended with 100 pts.mass of a diene rubber consisting of an isoprene rubber of 30 pts.mass to 70 pts.mass and a butadiene rubber of 30 pts.mass to 70 pts.mass and sulfur is blended so that a pure sulfur content is 0.8 pts.mass to 1.6 pts.mass.

JP 2009-269961 A relates to a rubber composition which is obtained by blending 2 to 20 pts.wt. regenerated rubber, ≥60 pts.wt. carbon black having 25 to 100 $m^2$/g nitrogen adsorption specific surface area and 4 to 18 pts.wt. thermosetting resin based on 100 pts.wt. diene-based rubber containing ≥61 wt.% natural rubber, and 5 to 15 wt.% curing agent based on the blending amount of the above thermosetting resin, and is characterized in that the Mooney viscosity of the regenerated rubber is 35 to 65, the natural rubber-containing ratio in the rubber component of the regenerated rubber is ≥60 wt.%, and the weight-average molecular weight of sol of the regenerated rubber, obtained by a gel permeation chromatography is ≤60,000.

SOLUTION TO PROBLEM

The present invention relates to a heavy duty tire, including a bead apex rubber,

the bead apex rubber including an inner apex portion and an outer apex portion, wherein at least one selected from the group consisting of the inner apex portion and the outer apex portion contains an isoprene-based rubber, carbon black, and a modified rubber material functionalized with a thiuram sulfide compound,
the heavy duty tire satisfying the following relationships (1) and (2):

$$(1) \quad E_i{}^* > E_o{}^*$$

$$(2) \quad E_i{}^*/E_o{}^* \leq 7.0$$

wherein $E_i{}^*$ and $E_o{}^*$ represent complex moduli of the inner apex portion and the outer apex portion, respectively, measured under conditions including a temperature of 70°C, an initial strain of 5%, a dynamic strain of 1%, a frequency of 10 Hz, and an extension mode,
wherein the heavy duty tire (1) satisfies the following relationship:

$$12.0 \geq Cao/(E_i{}^*/E_o{}^*) \geq 6.0$$

wherein Cao represents a carbon black content per 100 parts by mass of a rubber component content in the outer apex portion (8B), and $E_i{}^*/E_o{}^*$ is defined as above; and
wherein the heavy duty tire (1) satisfies the following relationship:

$$20.0 \geq Cai/(E_i{}^*/E_o{}^*) \geq 13.0$$

wherein Cai represents a carbon black content per 100 parts by mass of a rubber component content in the inner apex portion (8A), and $E_i{}^*/E_o{}^*$ is defined as above.

## BRIEF DESCRIPTION OF DRAWINGS

FIG. 1 is a cross-sectional view of an example of a heavy duty tire of the present invention.
FIG. 2 is an enlarged cross-sectional view of a bead portion.

## DESCRIPTION OF EMBODIMENTS

The present invention relates to a heavy duty tire which includes a bead apex rubber including an inner apex portion and an outer apex portion, and in which at least one selected from the group consisting of the inner apex portion and the outer apex portion contains an isoprene-based rubber, carbon black, and a modified rubber material functionalized with a thiuram sulfide compound, and the heavy duty tire satisfies relationships (1) and (2), and the heavy duty tire (1) satisfies the following relationship:

$$12.0 \geq Cao/(E_i{}^*/E_o{}^*) \geq 6.0$$

wherein Cao represents a carbon black content per 100 parts by mass of a rubber component content in the outer apex portion (8B), and $E_i{}^*/E_o{}^*$ is defined as above; and
the heavy duty tire (1) satisfies the following relationship:

$$20.0 \geq Cai/(E_i{}^*/E_o{}^*) \geq 13.0$$

wherein Cai represents a carbon black content per 100 parts by mass of a rubber component content in the inner apex portion (8A), and $E_i{}^*/E_o{}^*$ is defined as above. The heavy duty tire is highly durable.
The mechanism (reason) for this advantageous effect is not clear, but is believed to be as follows.
It is desirable from the standpoint of life cycle assessment (LCA) to use recycled materials in large heavy duty tires to be used on vehicles such as trucks and buses. Since heavy duty tires will be subjected to a higher load than normal tires, a two-layer structure has been proposed to soften the tip of the bead apex rubber. However, when rubber powder is used in either the inner portion (lower portion) or outer portion (upper portion) of the bead apex rubber, there is a concern that the bead apex rubber may show poor adhesion at the interface so that damage may occur from the interface when the tire travels under a high load. To solve this problem, a modified reclaimed rubber is dispersed in an isoprene-based rubber so that the portion functionalized with a thiuram sulfide compound may be bonded to reduce a decrease in rubber strength, and further carbon black is also used to reinforce the rubber. Thus, it is considered possible to ensure adhesion at the interface of the bead apex rubber and to reduce crack propagation from the interface. Moreover, the complex moduli ($E_i^*$, $E_o^*$) of the inner portion (lower portion) and outer portion (upper portion) of the bead apex rubber are controlled to satisfy relationships (1) and (2) so that the difference between the complex moduli is adjusted to a predetermined value or less. Thus, it is considered possible to reduce strain at the interface between the inner portion (lower portion) and the outer portion (upper portion) and reduce damage from the interface. Therefore, it is believed that high durability is imparted to the heavy duty tire.

As described above, the present invention solves the problem (purpose) of imparting high durability by formulating a bead apex rubber that includes an inner apex portion and an outer apex portion, at least one of which contains an isoprene-based rubber, carbon black, and a modified rubber material functionalized with a thiuram sulfide compound, to satisfy the relationships: (1) $E_i^* > E_o^*$ and (2) $E_i^*/E_o^* \leq 7.0$. In other words, the parameters of the relationships: (1) $E_i^* > E_o^*$ and (2) $E_i^*/E_o^* \leq 7.0$ do not define the problem (purpose), and the problem herein is to impart high durability. In order to provide a solution to this problem, the bead apex rubber has been formulated to satisfy the parameters.

The following describes embodiments of the present invention with reference to the drawings.

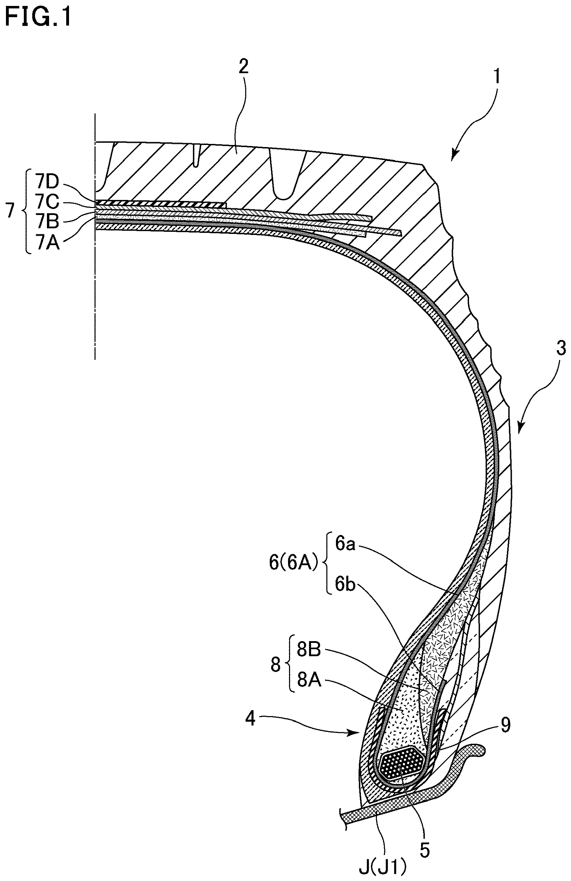

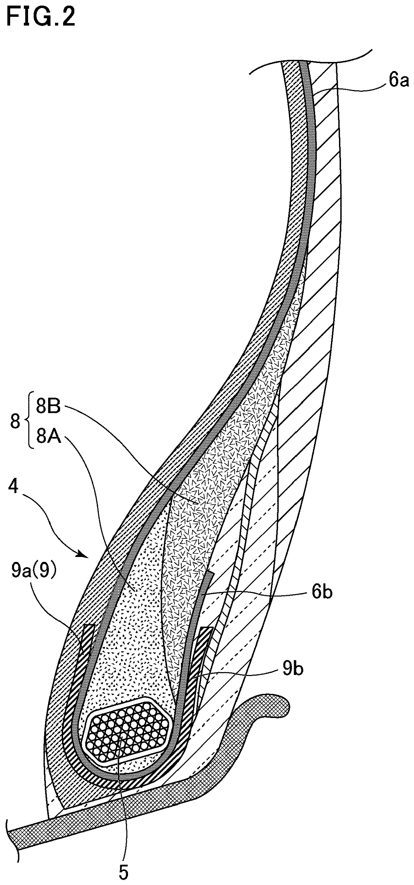

FIG. 1 is a cross-sectional view of an example of a heavy duty tire of the present invention that is a tubeless tire for vehicles such as trucks and buses inflated to 5% of the normal internal pressure, and FIG. 2 is an enlarged cross-sectional view of its bead portion.

In FIG. 1, a heavy duty tire 1 is formed including a carcass 6 that extends from a tread portion 2 via a sidewall portion 3 to a bead core 5 of a bead portion 4, and a belt layer 7 that is provided radially outward of the carcass 6 and inward of the tread portion 2.

In the example of FIG. 1, the belt layer 7 is formed of three or more belt plies with belt cords. This example shows a case where the belt layer 7 has a four-layer structure including: a radially innermost first belt ply 7A in which steel cords are arranged at an angle of, for example, 60 ± 15° relative to the circumferential direction of the tire; and second to fourth belt plies 7B to 7D in which steel cords are arranged at a small angle of, for example, 10 to 35° relative to the circumferential direction of the tire. The belt plies 7A to 7D are superimposed such that the belt cords in one ply cross the belt cords in another ply at one or more points, thereby increasing belt rigidity to reinforce the tread portion 2 with a hoop effect. Moreover, a belt reinforcement layer in which cords are arranged at an angle of ± 10° relative to the circumferential direction of the tire may be provided radially outward of the belt layer 7.

In this example, the carcass 6 is formed of a single carcass ply 6A in which carcass cords are arranged at an angle of 70 to 90° relative to the circumferential direction of the tire. The carcass cords may suitably be steel cords, but organic fiber cords such as nylon, rayon, polyester, or aromatic polyamide may also be used as needed. The carcass ply 6A includes a ply body portion 6a extending between the bead cores 5 and 5 and a ply turnup portion 6b connected to each side of the ply body portion 6a, which is folded around the bead core 5 from the inside to the outside in the axial direction of the tire.

The bead core 5 is, for example, a ring-shaped body consisting of steel bead wires wound in multiple rows and columns. This example shows a flat hexagonal one with a horizontally long cross section. The bead core 5 has a radially lower surface that is substantially parallel to a rim sheet J1 of a normal rim J, thereby increasing engagement with the rim J over a wide area. This example shows a case where the normal rim J is a 15° tapered rim for tubeless tires. Thus, the radially lower surface of the bead core 5 is inclined at an angle of 15° relative to the axial direction of the tire. The cross section of the bead core 5 may be a regular hexagonal shape, a rectangular shape, or a circular shape, as needed.

Next, as shown in FIG. 2, the bead portion 4 includes a bead apex rubber 8 that extends and tapers outwardly in the radial direction of the tire from the bead core 5 while passing between the ply body portion 6a and ply turnup portion 6b of the carcass 6; and a reinforcing cord layer 9 that extends in a U shape around and surrounds the bead core 5 through the carcass 6.

The reinforcing cord layer 9 has a U-shaped cross section including an inner section 9a extending along the inner surface of the ply body portion 6a and an outer section 9b that extends from the inner section 9a and passes radially inwardly of the bead core 5, and then rises radially outwardly along the outer surface of the ply turnup portion 6b. This example shows the reinforcing cord layer 9 formed of a single cord ply in which steel reinforcing cords are arranged at an angle of 10 to 60° relative to the circumferential direction of the tire.

Next, the bead apex rubber 8 includes an inner apex portion 8A and an outer apex portion 8B. In this example, the bead apex rubber 8 has a two-layer structure including an inner apex portion 8A and an outer apex portion 8B, and the inner apex portion 8A is formed of a hard rubber having a small triangular cross section with a slope that extends outwardly in the radial direction of the tire and leans inwardly from the outside in the axial direction of the tire, and the outer apex portion 8B is formed of a soft rubber that extends outwardly in the radial direction of the tire from the bottom surface in contact with the slope.

The following relationships (1) and (2) are satisfied:

$$(1) \quad E_i{}^* > E_o{}^*$$

$$(2) \quad E_i{}^*/E_o{}^* \leq 7.0$$

wherein $E_i{}^*$ and $E_o{}^*$ represent the complex moduli of the inner apex portion 8A and the outer apex portion 8B, respectively, measured under conditions including a temperature of 70°C, an initial strain of 5%, a dynamic strain of 1%, a frequency of 10 Hz, and an extension mode.

$E_i{}^*/E_o{}^*$ is preferably 6.0 or less, more preferably 5.0 or less, still more preferably 4.5 or less, particularly preferably 4.0 or less. The lower limit is preferably, but not limited to, 2.0 or more, more preferably 3.0 or more, still more preferably 3.5 or more, particularly preferably 3.8 or more. When $E_i{}^*/E_o{}^*$ is within the range indicated above, the advantageous effect tends to be better achieved.

$E_i{}^*$ is preferably 13.0 MPa or higher, more preferably 15.0 MPa or higher, still more preferably 18.0 MPa or higher, particularly preferably 20.0 MPa or higher. The upper limit is preferably, but not limited to, 30.0 MPa or lower, more preferably 26.0 MPa or lower, still more preferably 24.0 MPa or lower, particularly preferably 22.0 MPa or lower. When $E_i{}^*$ is within the range indicated above, the advantageous effect tends to be better achieved.

The mechanism (reason) for this advantageous effect is not clear, but is believed to be as follows.

When the complex modulus of the inner apex portion is adjusted to a predetermined value or higher, the bead apex is considered to be subjected to less deformation. Thus, it is believed that high durability is imparted to the heavy duty tire.

$E_o{}^*$ is preferably 2.0 MPa or higher, more preferably 3.0 MPa or higher, still more preferably 3.5 MPa or higher, particularly preferably 4.0 MPa or higher. The upper limit is preferably, but not limited to, 7.0 MPa or lower, more preferably 6.0 MPa or lower, still more preferably 5.5 MPa or lower, particularly preferably 5.0 MPa or lower. When $E_o{}^*$ is within the range indicated above, the advantageous effect tends to be better achieved.

The complex moduli ($E^*$) can be controlled, for example, by incorporating an isoprene-based rubber and a modified rubber material functionalized with a thiuram sulfide compound or varying the types and amounts of carbon black, additional fillers, vulcanizing agents, and vulcanization accelerators. Specifically, $E^*$ tends to increase when an isoprene-based rubber and a modified rubber material functionalized with a thiuram sulfide compound are incorporated, or when the amount of fillers or carbon black is increased, or when the particle size of carbon black is reduced.

Here, $E_i{}^*$ and $E_o{}^*$ refer to the complex moduli measured under conditions including a temperature of 70°C, an initial strain of 5%, a dynamic strain of 1%, a frequency of 10 Hz, and an extension mode.

$E_i{}^*$ and $E_o{}^*$ are the values of the vulcanized rubber compositions.

The inner apex portion 8A and the outer apex portion 8B are formed of an inner apex portion rubber composition and an outer apex portion rubber composition, respectively. At least one of the inner and outer apex portion rubber compositions contains an isoprene-based rubber, carbon black, and a modified rubber material functionalized with a thiuram sulfide compound. Desirably, both the inner apex portion rubber composition and the outer apex portion rubber composition contain these components in order to better achieve the advantageous effect.

Examples of isoprene-based rubbers that may be used in the inner apex portion rubber composition or outer apex portion rubber composition include natural rubbers (NR), polyisoprene rubbers (IR), refined NR, modified NR, and modified IR. Examples of the NR include those commonly used in the rubber industry such as SIR20, RSS#3, and TSR20. Any IR may be used including for example those commonly used in the rubber industry such as IR2200. Examples of the refined NR include deproteinized natural rubbers (DPNR) and highly purified natural rubbers (UPNR). Examples of the modified NR include epoxidized natural rubbers (ENR), hydrogenated natural rubbers (HNR), and grafted natural rubbers. Examples of the modified IR include epoxidized polyisoprene rubbers, hydrogenated polyisoprene rubbers, and grafted polyisoprene rubbers. These may be used alone or in combinations of two or more.

The amount of isoprene-based rubbers, if present, based on 100% by mass of the rubber component content in the inner apex portion rubber composition is preferably 50% by mass or more, more preferably 60% by mass or more, still more preferably 70% by mass or more, particularly preferably 80% by mass or more. The upper limit may be, but not limited to, 100% by mass, preferably 95% by mass or less, more preferably 90% by mass or less, still more preferably 85% by mass or less. When the amount is within the range indicated above, the advantageous effect tends to be better achieved.

The amount of isoprene-based rubbers, if present, based on 100% by mass of the rubber component content in the outer apex portion rubber composition is preferably 50% by mass or more, more preferably 70% by mass or more, still more preferably 80% by mass or more, particularly preferably 90% by mass or more, and may be 100% by mass. When the amount is within the range indicated above, the advantageous effect tends to be better achieved.

The inner apex portion rubber composition or outer apex portion rubber composition may contain additional rubber components other than isoprene-based rubbers. Examples of such additional rubber components include additional diene rubbers, such as polybutadiene rubbers (BR), styrene-butadiene rubbers (SBR), styrene-isoprene-butadiene rubbers (SIBR), ethylene-propylene-diene rubbers (EPDM), chloroprene rubbers (CR), and acrylonitrile butadiene rubbers (NBR). Other examples include butyl-based rubbers and fluororubbers. These may be used alone or in combinations of two or more. In particular, preferably the inner apex portion rubber composition and the outer apex portion rubber composition contain SBR and BR, respectively, in order to better achieve the advantageous effect.

Non-limiting examples of SBR include emulsion-polymerized styrene-butadiene rubbers (E-SBR) and solution-polymerized styrene-butadiene rubbers (S-SBR). These may be used alone or in combinations of two or more.

The styrene content of the SBR is preferably 5% by mass or more, more preferably 10% by mass or more, still more preferably 15% by mass or more. The styrene content is also preferably 60% by mass or less, more preferably 30% by mass or less, still more preferably 25% by mass or less. When the styrene content is within the range indicated above, the advantageous effect tends to be better achieved.

Here, the styrene content of the SBR is determined by $^1$H-NMR analysis.

The vinyl content of the butadiene portion of the SBR is preferably 5% by mass or more, more preferably 10% by mass or more, still more preferably 15% by mass or more. The vinyl content is preferably 80% by mass or less, more preferably 60% by mass or less, still more preferably 50% by mass or less. When the vinyl content is within the range indicated above, the advantageous effect tends to be better achieved.

Here, the vinyl content of the SBR can be measured by infrared absorption spectrometry.

SBR products manufactured or sold by, for example, Sumitomo Chemical Co., Ltd., JSR Corporation, Asahi Kasei Corporation, Zeon Corporation, etc. may be used as the SBR.

The SBR may be either unmodified or modified SBR.

The modified SBR may be any SBR having a functional group interactive with a filler such as silica. Examples include chain end-modified SBR obtained by modifying at least one chain end of SBR with a compound (modifier) having the functional group (i.e., chain end-modified SBR terminated with the functional group); backbone-modified SBR having the functional group in the backbone; backbone- and chain end-modified SBR having the functional group in both the backbone and chain end (e.g., backbone- and chain end-modified SBR in which the backbone has the functional group and at least one chain end is modified with the modifier); and chain end-modified SBR into which a hydroxy or epoxy group has been introduced by modification (coupling) with a polyfunctional compound having two or more epoxy groups in the molecule.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxy, nitrile, pyridyl, alkoxy, hydroxy, oxy, and epoxy groups. These functional groups may be substituted. Preferred among these are amino groups (preferably amino groups whose hydrogen atom is replaced with a C1-C6 alkyl group), alkoxy groups (preferably C1-C6 alkoxy groups), and alkoxysilyl groups (preferably C1-C6 alkoxysilyl groups).

Non-limiting examples of BR include high cis BR having a high cis content, BR containing syndiotactic polybutadiene crystals, and BR synthesized using rare earth catalysts (rare earth-catalyzed BR). In particular, high cis BR having a cis content of 90% by mass or higher is preferred in order to improve abrasion resistance. These may be used alone or in combinations of two or more.

Moreover, the BR may be either unmodified or modified BR. Examples of the modified BR include those into which functional groups as listed for the modified SBR have been introduced.

The BR may be commercially available from, for example, Ube Industries, Ltd., JSR Corporation, Asahi Kasei Corporation, Zeon Corporation, etc.

The amount of SBR, if present, based on 100% by mass of the rubber component content in the inner apex portion rubber composition is preferably 5% by mass or more, more preferably 10% by mass or more, still more preferably 15% by mass or more, particularly preferably 20% by mass or more. The upper limit is preferably, but not limited to, 50% by mass or less, more preferably 40% by mass or less, still more preferably 30% by mass or less. When the amount is within the range indicated above, the advantageous effect tends to be better achieved.

The amount of BR, if present, based on 100% by mass of the rubber component content in the outer apex portion rubber composition is preferably 5% by mass or more, more preferably 10% by mass or more, still more preferably 15% by mass or more, particularly preferably 20% by mass or more. The upper limit is preferably, but not limited to, 50% by mass or less, more preferably 40% by mass or less, still more preferably 30% by mass or less. When the amount is within the range indicated above, the advantageous effect tends to be better achieved.

Non-limiting examples of carbon black that may be used in the inner apex portion rubber composition or outer apex portion rubber composition include GPF, FEF, HAF, ISAF, and SAF. Usable commercial products are available from Asahi Carbon Co., Ltd., Cabot Japan K.K., Tokai Carbon Co., Ltd., Mitsubishi Chemical Corporation, Lion Corporation, NIPPON STEEL Carbon Co., Ltd., Columbia Carbon, etc. These may be used alone or in combinations of two or more.

In the inner apex portion rubber composition, the nitrogen adsorption specific surface area ($N_2SA$) of the carbon black is preferably 20 $m^2/g$ or more, more preferably 50 $m^2/g$ or more, still more preferably 70 $m^2/g$ or more. The upper limit of the $N_2SA$ of the carbon black is preferably, but not limited to, 150 $m^2/g$ or less, more preferably 100 $m^2/g$ or less, still more preferably 90 $m^2/g$ or less. When the $N_2SA$ is within the range indicated above, the advantageous effect tends to be better achieved.

The amount of carbon black per 100 parts by mass of the rubber component content in the inner apex portion rubber composition is preferably 30 parts by mass or more, more preferably 50 parts by mass or more, still more preferably 65 parts by mass or more, particularly preferably 70 parts by mass or more. The amount of carbon black is also preferably 150 parts by mass or less, more preferably 120 parts by mass or less, still more preferably 100 parts by mass or less, particularly preferably 90 parts by mass or less. When the amount is within the range indicated above, the advantageous effect tends to be better achieved.

In the outer apex portion rubber composition, the nitrogen adsorption specific surface area ($N_2SA$) of the carbon black is preferably 20 $m^2/g$ or more, more preferably 30 $m^2/g$ or more, still more preferably 40 $m^2/g$ or more. The upper limit of the $N_2SA$ of the carbon black is preferably, but not limited to, 150 $m^2/g$ or less, more preferably 100 $m^2/g$ or less, still more preferably 80 $m^2/g$ or less, particularly preferably 60 $m^2/g$ or less. When the $N_2SA$ is within the range indicated above, the advantageous effect tends to be better achieved.

Here, the nitrogen adsorption specific surface area of the carbon black is determined in accordance with the method A in JIS K 6217.

The amount of carbon black per 100 parts by mass of the rubber component content in the outer apex portion rubber composition is preferably 20 parts by mass or more, more preferably 30 parts by mass or more, still more preferably 35 parts by mass or more, particularly preferably 40 parts by mass or more. The amount of carbon black is also preferably 100 parts by mass or less, more preferably 80 parts by mass or less, still more preferably 70 parts by mass or less, particularly preferably 60 parts by mass or less. When the amount is within the range indicated above, the advantageous effect tends to be better achieved.

Examples of fillers other than carbon black that may be used in the inner apex portion rubber composition or outer apex portion rubber composition include those known in the rubber field, including silica, calcium carbonate, talc, alumina, clay, aluminum hydroxide, aluminum oxide, and mica. Silica is preferred among these.

Examples of silica that may be used in the inner apex portion rubber composition or outer apex portion rubber composition include dry silica (anhydrous silica) and wet silica (hydrous silica). Wet silica is preferred among these because it has a large number of silanol groups.

The amount of silica, if present, per 100 parts by mass of the rubber component content in the inner apex portion rubber composition or outer apex portion rubber composition is preferably 50 parts by mass or less, more preferably 20 parts by mass or less, still more preferably 10 parts by mass or less, particularly preferably 5 parts by mass or less. The lower limit is preferably, but not limited to, 3 parts by mass or more, more preferably 5 parts by mass or more. When the amount is within the range indicated above, the advantageous effect tends to be better achieved.

The nitrogen adsorption specific surface area ($N_2SA$) of the silica is preferably 50 $m^2/g$ or more, more preferably 100 $m^2/g$ or more, still more preferably 150 $m^2/g$ or more. The $N_2SA$ of the silica is also preferably 250 $m^2/g$ or less, more preferably 220 $m^2/g$ or less, still more preferably 200 $m^2/g$ or less. When the $N_2SA$ is within the range indicated above, the advantageous effect tends to be better achieved.

Here, the $N_2SA$ of the silica is measured by a BET method in accordance with ASTM D3037-93.

The silica may be commercially available from, for example, Degussa, Rhodia, Tosoh Silica Corporation, Solvay Japan, Tokuyama Corporation, etc.

The inner apex portion rubber composition or outer apex portion rubber composition preferably contains a silane coupling agent together with the silica.

Non-limiting examples of the silane coupling agent include sulfide silane coupling agents such as bis(3-triethoxysilylpropyl)tetrasulfide, bis(2-triethoxysilylethyl)tetrasulfide, bis(4-triethoxysilylbutyl)tetrasulfide, and bis(3-trimethoxysilylpropyl)tetrasulfide; mercapto silane coupling agents such as 3-mercaptopropyltrimethoxysilane; vinyl silane coupling agents such as vinyltriethoxysilane; amino silane coupling agents such as 3-aminopropyltriethoxysilane; glycidoxy silane coupling agents such as γ-glycidoxypropyltriethoxysilane; nitro silane coupling agents such as 3-nitropropyltrimethoxysilane; and chloro silane coupling agents such as 3-chloropropyltrimethoxysilane and 3-chloropropyltriethoxysilane. Among these, sulfide silane coupling agents are preferred in order to better achieve the advantageous effect.

The silane coupling agents may be commercially available from Degussa, Momentive, Shin-Etsu Silicone, Tokyo Chemical Industry Co., Ltd., AZmax. Co., Dow Corning Toray Co., Ltd., etc.

The amount of silane coupling agents, if present, per 100 parts by mass of the silica content in the inner apex portion rubber composition or outer apex portion rubber composition is preferably 3 parts by mass or more, more preferably 5 parts by mass or more, still more preferably 8 parts by mass or more, but is preferably 25 parts by mass or less, more preferably 20 parts by mass or less, still more preferably 15 parts by mass or less. When the amount is within the range indicated above, the advantageous effect tends to be better achieved.

Non-limiting examples of modified rubber materials functionalized with thiuram sulfide compounds that may be used in the inner apex portion rubber composition or outer apex portion rubber composition include any rubber material modified with a thiuram sulfide compound.

Herein, modified rubber materials functionalized with thiuram sulfide compounds do not correspond to the above-described rubber components.

Non-limiting examples of the thiuram sulfide compounds include alkyl thiuram sulfides, aryl thiuram sulfides, heterocyclic thiuram sulfides, thiuram disulfides, thiuram polysulfides, tetrabenzylthiuram disulfides, tetraalkylthiuram disulfides, tetramethylthiuram disulfide, tetraethylthiuram disulfide, and dipentamethylthiuram monosulfide. These may be used alone or in combinations of two or more.

Non-limiting examples of the rubber (backbone-forming rubber) to be functionalized with such a thiuram sulfide compound include rubber components as described above.

From the standpoint of life cycle assessment (LCA), modified reclaimed rubbers are suitable as the modified rubber materials functionalized with thiuram sulfide compounds. Herein, the term "modified reclaimed rubbers" refers to rubber materials obtained by crushing part of used rubber products (waste rubber products) such as tires, followed by desulfurization and then functionalization with thiuram sulfide compounds. When such modified reclaimed rubbers functionalized with thiuram sulfide compounds are used, the advantageous effect tends to be better achieved.

The modified reclaimed rubbers are advantageous materials for ameliorating possible problems associated with the use of recycled materials, such as a reduction in reinforcement, because the crosslinks in the rubbers have been partially cleaved by desulfurization and functionalization, so that the rubbers have a higher reactivity. For example, such rubbers may be prepared by functionalizing with modifying compounds (introducing modifying compounds into) reclaimed rubbers or vulcanized rubber powders (powdered rubbers) which contain reactive functional groups with unvulcanized diene rubbers. Non-limiting examples of the reclaimed rubbers used here include: crushed rubbers having been mechanically crushed at room temperature or in a frozen state, and desulfurized rubbers having been further desulfurized; and those recycled from rubbers such as used rubbers of automobile tires, tubes, or other rubber products as defined in JIS K 6313, and reclaimed rubbers having properties comparable thereto.

Such modified reclaimed rubbers may be commercially available from Lehigh, etc.

The amount of modified rubber materials functionalized with thiuram sulfide compounds per 100 parts by mass of the rubber component content in the inner apex portion rubber composition is preferably 3 parts by mass or more, more preferably 6 parts by mass or more, still more preferably 8 parts by mass or more, particularly preferably 10 parts by mass or more. The amount is also preferably 50 parts by mass or less, more preferably 30 parts by mass or less, still more preferably 15 parts by mass or less, particularly preferably 13 parts by mass or less. When the amount is within the range indicated above, the advantageous effect tends to be better achieved.

The amount of modified rubber materials functionalized with thiuram sulfide compounds per 100 parts by mass of the rubber component content in the outer apex portion rubber composition is preferably 5 parts by mass or more, more preferably 10 parts by mass or more, still more preferably 15 parts by mass or more, particularly preferably 20 parts by mass or more. The amount is also preferably 50 parts by mass or less, more preferably 40 parts by mass or less, still more preferably 30 parts by mass or less, particularly preferably 25 parts by mass or less. When the amount is within the range indicated above, the advantageous effect tends to be better achieved.

To better achieve the advantageous effect, at least one of the inner and outer apex portion rubber compositions preferably has a ratio of the amount of modified rubber materials functionalized with thiuram sulfide compounds to the amount of isoprene-based rubbers [(the modified rubber material content (parts by mass) in the rubber composition)/(the isoprene-based rubber content (parts by mass) in the rubber composition)] of 0.33 or less, more preferably 0.25 or less, still more preferably 0.22 or less, particularly preferably 0.20 or less. The lower limit of the ratio is preferably, but not limited to, 0.10 or more, more preferably 0.12 or more, still more preferably 0.14 or more, particularly preferably 0.16 or more. When the ratio is within the range indicated above, the advantageous effect tends to be better achieved. Both the inner apex portion rubber composition and the outer apex portion rubber composition desirably satisfy the above relationship.

The mechanism (reason) for this advantageous effect is not clear, but is believed to be as follows.

As the ratio of the modified rubber material content to the isoprene-based rubber content, especially the ratio of the modified reclaimed rubber content to the isoprene-based rubber content, increases, the modified reclaimed rubber has a larger contribution in the resulting rubber, possibly causing a reduction in interfacial adhesion and loss of durability. However, such a concern is considered to be reduced when the ratio is adjusted to a predetermined value or less, especially 0.25 or less. Thus, it is believed that high durability is imparted to the heavy duty tire.

To better achieve the advantageous effect, at least one of the inner and outer apex portion rubber compositions preferably has a ratio of the amount of carbon black to the amount of modified rubber materials functionalized with thiuram sulfide compounds [(the carbon black content (parts by mass) in the rubber composition)/(the modified rubber material content (parts by mass) in the rubber composition)] of 1.5 or more, more preferably 2.0 or more, still more preferably 2.5 or more, particularly preferably 3.0 or more. The upper limit of the ratio is preferably, but not limited to, 5.0 or less, more preferably 4.5 or less, still more preferably 4.0 or less, particularly preferably 3.5 or less. When the ratio is within the range indicated above, the advantageous effect tends to be better achieved. Both the inner apex portion rubber composition and the outer apex portion rubber composition desirably satisfy the above relationship.

The mechanism (reason) for this advantageous effect is not clear, but is believed to be as follows.

It is considered that dispersing carbon black around the modified rubber material, especially the modified reclaimed rubber, can reinforce the resulting entire rubber, thereby inhibiting crack growth from the interface. Thus, it is believed that high durability is imparted to the heavy duty tire.

The inner apex portion rubber composition or outer apex portion rubber composition may contain a powdered reclaimed rubber. The term "powdered reclaimed rubber" refers to a material which is selected from crushed rubbers having been mechanically crushed at room temperature or in a frozen state, and desulfurized rubbers having been further desulfurized; and those recycled from rubbers such as used rubbers of automobile tires, tubes, or other rubber products as defined in JIS K 6313, and reclaimed rubbers having properties comparable thereto, and which has not undergone any modification treatment such as desulfurization or functionalization.

Herein, powdered reclaimed rubbers do not correspond to the rubber components.

The amount of powdered reclaimed rubbers, if present, per 100 parts by mass of the rubber component content in the inner apex portion rubber composition or outer apex portion rubber composition is preferably 3 parts by mass or more, more preferably 6 parts by mass or more, still more preferably 8 parts by mass or more, particularly preferably 10 parts by mass or more. The amount is also preferably 50 parts by mass or less, more preferably 30 parts by mass or less, still more preferably 15 parts by mass or less, particularly preferably 13 parts by mass or less.

The inner apex portion rubber composition or outer apex portion rubber composition may contain a plasticizer.

Herein, the term "plasticizer" refers to a material that can impart plasticity to rubber components, and conceptionally includes liquid plasticizers (plasticizers which are liquid at 25°C) and solid plasticizers (plasticizers which are solid at 25°C). Specifically, it is, for example, a component that can be extracted with acetone from the rubber composition thereof. These may be used alone or in combinations of two or more.

The total amount of plasticizers (the combined amount of liquid plasticizers and solid plasticizers) per 100 parts by mass of the rubber component content in the inner apex portion rubber composition or outer apex portion rubber composition is preferably 10.0 parts by mass or less, more preferably 5.0 parts by mass or less, still more preferably 3.0 parts by mass or less, particularly preferably 2.0 part by mass or less. When the total amount is within the range indicated above, the advantageous effect tends to be better achieved.

Herein, the amount of plasticizers includes the amount of the oils contained in the rubbers (oil extended rubbers) or sulfur (oil-containing sulfur), if used.

Examples of liquid plasticizers include oils, liquid polymers (e.g., diene, olefin, and ester polymers), liquid resins, essential oils derived from natural products such as turpentine oil, and ester plasticizers. Examples of solid plasticizers include solid resins which are solid at 25°C, such as those usually used in the tire industry. These may be used alone or in combinations of two or more. Preferred among the liquid plasticizers is at least one selected from the group consisting of oils, liquid polymers, and liquid resins, with oils being more preferred, with process oils being still more preferred.

Non-limiting examples of oils include conventionally known oils, including process oils such as paraffinic process oils, aromatic process oils, and naphthenic process oils; low polycyclic aromatic (PCA) process oils such as TDAE and MES; vegetable oils; and mixtures thereof. These may be used alone or in combinations of two or more. Paraffinic process oils are preferred among these.

The oils may be commercially available from, for example, Idemitsu Kosan Co., Ltd., Sankyo Yuka Kogyo K.K., ENEOS Corporation, Olisoy, H&R, Hokoku Corporation, Showa Shell Sekiyu K.K., Fuji Kosan Co., Ltd., etc.

Examples of liquid resins include terpene resins (including terpene phenol resins and aromatic modified terpene resins), rosin resins, styrene resins, C5 resins, C5/C9 resins, coumarone-indene resins (including resins based on coumarone or indene alone), olefin resins, polyurethane resins, and acrylic resins, all of which are liquid at 25°C.

The liquid resins may be commercially available from, for example, Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

Examples of liquid diene polymers include liquid styrene-butadiene copolymers (liquid SBR), liquid polybutadiene polymers (liquid BR), liquid polyisoprene polymers (liquid IR), liquid styrene-isoprene copolymers (liquid SIR), liquid styrene-butadiene-styrene block copolymers (liquid SBS block polymers), and liquid styrene-isoprene-styrene block copolymers (liquid SIS block polymers), all of which are liquid at 25°C. The chain end or backbone of these polymers may be modified with a polar group.

The liquid diene polymers may be commercially available from, for example, Sartomer, Kuraray Co., Ltd., etc.

The amount of liquid plasticizers (preferably oils) per 100 parts by mass of the rubber component content in the inner apex portion rubber composition or outer apex portion rubber composition is preferably 10.0 parts by mass or less, more preferably 5.0 parts by mass or less, still more preferably 3.0 parts by mass or less, particularly preferably 2.0 parts by mass or less. When the amount is within the range indicated above, the advantageous effect tends to be better achieved.

Herein, the amount of liquid plasticizers includes the amount of the oils contained in the rubbers (oil extended rubbers) or sulfur (oil-containing sulfur), if used.

Examples of solid plasticizers include solid resins usually used as tire compounding ingredients. Specific examples include terpene resins, rosin resins, styrene resins, olefin resins, C5 resins, C9 resins, C5/C9 resins, coumarone resins, indene resins, coumarone-indene resins, acrylic resins, urethane resins, and other resins. These may be used alone or as a mixture of two or more. Also usable are resins which themselves are copolymers of multiple types of monomer components.

The solid plasticizers may be commercially available from, for example, Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

The softening point of the solid plasticizers is preferably 30°C or higher, more preferably 50°C or higher, still more preferably 80°C or higher, but is preferably 200°C or lower, more preferably 160°C or lower, still more preferably 140°C or lower, particularly preferably 120°C or lower. When the softening point is within the range indicated above, the advantageous effect tends to be more suitably achieved.

Herein, the softening point of the solid plasticizers is determined in accordance with JIS K 6220-1:2001 using a ring and ball softening point measuring apparatus and defined as the temperature at which the ball drops down.

The amount of solid plasticizers (preferably resins) per 100 parts by mass of the rubber component content in the inner apex portion rubber composition or outer apex portion rubber composition is preferably 10.0 parts by mass or less, more preferably 5.0 parts by mass or less, still more preferably 3.0 parts by mass or less, particularly preferably 2.0 parts by mass or less. When the amount is within the range indicated above, the advantageous effect tends to be better achieved.

The inner apex portion rubber composition or outer apex portion rubber composition preferably contains sulfur.

Examples of the sulfur include those commonly used in the rubber industry, such as powdered sulfur, precipitated sulfur, colloidal sulfur, insoluble sulfur, highly dispersible sulfur, and soluble sulfur. These may be used alone or in combinations of two or more.

The sulfur may be commercially available from, foe example, Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd., etc.

The amount of sulfur per 100 parts by mass of the rubber component content in the inner apex portion rubber composition or outer apex portion rubber composition is preferably 0.1 parts by mass or more, more preferably 0.5 parts by mass or more, still more preferably 0.8 parts by mass or more. The amount is also preferably 10.0 parts by mass or less, more preferably 7.0 parts by mass or less, still more preferably 5.5 parts by mass or less, particularly preferably 4.0 parts by mass or less. When the amount is within the range indicated above, the advantageous effect tends to be better achieved.

The inner apex portion rubber composition or outer apex portion rubber composition preferably contains a vulcanization accelerator.

Examples of the vulcanization accelerator include thiazole vulcanization accelerators such as 2-mercaptobenzothiazole and di-2-benzothiazolyl disulfide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazolylsulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more. Sulfenamide vulcanization accelerators are preferred among these.

The vulcanization accelerators may be commercially available from Kawaguchi Chemical Industry Co., Ltd., Ouchi Shinko Chemical Industrial Co., Ltd., Rhein Chemie, etc.

The amount of vulcanization accelerators per 100 parts by mass of the rubber component content in the inner apex portion rubber composition or outer apex portion rubber composition is preferably 0.5 parts by mass or more, more preferably 1.0 parts by mass or more, but is preferably 10.0 parts by mass or less, more preferably 5.0 parts by mass or less. When the amount is within the range indicated above, the advantageous effect tends to be better achieved.

The inner apex portion rubber composition or outer apex portion rubber composition preferably contains stearic acid.

11

The stearic acid used may be a conventional one, and examples include commercial products of NOF Corporation, Kao Corporation, FUJIFULM Wako Pure Chemical Corporation, Chiba Fatty Acid Co., Ltd., etc.

The amount of stearic acid per 100 parts by mass of the rubber component content in the inner apex portion rubber composition or outer apex portion rubber composition is preferably 0.5 parts by mass or more, more preferably 1 part by mass or more. The amount is also preferably 5 parts by mass or less, more preferably 3 parts by mass or less. When the amount is within the range indicated above, the advantageous effect tends to be better achieved.

The inner apex portion rubber composition or outer apex portion rubber composition may contain zinc oxide.

The zinc oxide used may be a conventional one, and examples include commercial products of Mitsui Mining & Smelting Co., Ltd., Toho Zinc Co., Ltd., HakusuiTech Co., Ltd., Seido Chemical Industry Co., Ltd., and Sakai Chemical Industry Co., Ltd., etc.

The amount of zinc oxide per 100 parts by mass of the rubber component content in the inner apex portion rubber composition or outer apex portion rubber composition is preferably 0.5 parts by mass or more, more preferably 1 part by mass or more, but is preferably 10 parts by mass or less, more preferably 5 parts by mass or less. When the amount is within the range indicated above, the advantageous effect tends to be better achieved.

The inner apex portion rubber composition or outer apex portion rubber composition may contain an antioxidant.

Examples of the antioxidant include naphthylamine antioxidants such as phenyl-$\alpha$-naphthylamine; diphenylamine antioxidants such as octylated diphenylamine and 4,4'-bis($\alpha,\alpha$'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. These may be used alone or in combinations of two or more. Among these, p-phenylenediamine or quinoline antioxidants are preferred, and p-phenylenediamine antioxidants are more preferred.

The antioxidants may be commercially available from, for example, Seiko Chemical Co., Ltd., Sumitomo Chemical Co., Ltd., Ouchi Shinko Chemical Industrial Co., Ltd., Flexsys, etc.

The amount of antioxidants per 100 parts by mass of the rubber component content in the inner apex portion rubber composition or outer apex portion rubber composition is preferably 0.5 parts by mass or more, more preferably 1 part by mass or more, but is preferably 10 parts by mass or less, more preferably 5 parts by mass or less. When the amount is within the range indicated above, the advantageous effect tends to be better achieved.

The inner apex portion rubber composition or outer apex portion rubber composition may contain a wax.

Non-limiting examples of the wax include petroleum waxes such as paraffin waxes and microcrystalline waxes; naturally occurring waxes such as plant waxes and animal waxes; and synthetic waxes such as polymers of ethylene, propylene, or other similar monomers. These may be used alone or in combinations of two or more.

The waxes may be commercially available from Ouchi Shinko Chemical Industrial Co., Ltd., Nippon Seiro Co., Ltd., Seiko Chemical Co., Ltd., etc.

The amount of waxes per 100 parts by mass of the rubber component content in the inner apex portion rubber composition or outer apex portion rubber composition is preferably 0.5 parts by mass or more, more preferably 1 part by mass or more. The amount is also preferably 10 parts by mass or less, more preferably 7 parts by mass or less. When the amount is within the range indicated above, the advantageous effect tends to be better achieved.

In addition to the above-described components, the inner apex portion rubber composition or outer apex portion rubber composition may contain additives commonly used in the tire industry, such as vulcanizing agents other than sulfur (e.g., organic crosslinking agents, organic peroxides). The amounts of these components are each preferably 0.1 parts by mass or more, but preferably 200 parts by mass or less, per 100 parts by mass of the rubber component content.

The following relationship is satisfied:

$$12.0 \geq Cao/(E_i^*/E_o^*) \geq 6.0$$

wherein Cao represents the carbon black content (parts by mass) per 100 parts by mass of the rubber component content in the outer apex portion rubber composition, and $E_i^*/E_o^*$ is defined as above.

$Cao/(E_i^*/E_o^*)$ is preferably 7.0 or more, particularly preferably 8.0 or more. When the ratio is within the range indicated above, the advantageous effect tends to be better achieved.

The following relationship is satisfied:

$$20.0 \geq Cai/(E_i^*/E_o^*) \geq 13.0$$

wherein Cai represents the carbon black content (parts by mass) per 100 parts by mass of the rubber component content in the inner apex portion rubber composition, and $E_i^*/E_o^*$ is defined as above.

Cai/($E_i^*/E_o^*$) is preferably 15.0 or more. The upper limit is preferably 18.0 or less. When the ratio is within the range indicated above, the advantageous effect tends to be better achieved.

The rubber compositions may be prepared, for example, by kneading the components in a rubber kneading machine such as an open roll mill or a Banbury mixer and then vulcanizing the kneaded mixture.

The kneading conditions are as follows. In a base kneading step of kneading additives other than crosslinking agents (vulcanizing agents) and vulcanization accelerators, the kneading temperature is usually 100 to 180°C, preferably 120 to 170°C. In a final kneading step of kneading vulcanizing agents and vulcanization accelerators, the kneading temperature is usually 120°C or lower, preferably 80 to 110°C. Then, the composition obtained after kneading vulcanizing agents and vulcanization accelerators is usually vulcanized by, for example, press vulcanization. The vulcanization temperature is usually 140 to 190°C, preferably 150 to 185°C.

The heavy duty tire can be produced from the above-described rubber compositions by usual methods. Specifically, the unvulcanized rubber compositions containing various additives as needed may be extruded into the shape of an inner apex portion and an outer apex portion, respectively, and then formed and assembled with other tire components in a usual manner on a tire building machine to build an unvulcanized tire, which may then be heated and pressurized in a vulcanizer to produce a tire.

The heavy duty tire may be, for example, but not limited to, a pneumatic tire, a solid tire, or an airless tire. Preferably it is a pneumatic tire, among others.

. The heavy duty tire 1 of FIG. 1 can be applied to various tires, including for example a heavy duty pneumatic tire, and a non-pneumatic tire whose interior is not filled with pressurized air. For example, the heavy duty tire 1 may be a tire for trucks, buses, or other heavy duty vehicles.

Here, the term "heavy duty tire" refers to a tire with a maximum load capacity of 1400 kg or more. Here, the term "maximum load capacity" refers to a maximum load capacity specified for each tire by the standard in a standard system including standards according to which tires are provided, and may be, for example, the maximum load capacity based on the load index (LI) in the Japan Automobile Tyre Manufacturers Association standard (JATMA standard), the maximum value shown in Table "TIRE LOAD LIMITS AT VARIOUS COLD INFLATION PRESSURES" in TRA, or the "load capacity" in ETRTO.

Although particularly preferred embodiments of the present invention are described in detail above, the present invention is not limited to the illustrated embodiments and may be implemented in various modified embodiments.

EXAMPLES

The present invention will be specifically described with reference to, but not limited to, examples.

The following describes the chemicals used in the examples and comparative examples.

NR: TSR20

SBR: SBR1502 (styrene content: 23.5% by mass) available from Sumitomo Chemical Co., Ltd.

BR: BR150B (cis content: 98% by mass) available from Ube Industries, Ltd.

Carbon black 1: N550 ($N_2SA$: 41 $m^2$/g) available from Cabot Japan K.K.

Carbon black 2: N330 ($N_2SA$ 75 $m^2$/g) available from Cabot Japan K.K.

Modified rubber material: EkoDyne (a modified reclaimed rubber functionalized with a thiuram sulfide compound) available from Lehigh

Reclaimed rubber (unmodified): GF-80 REPROCESSED GROUND RUBBER (powdered reclaimed rubber, particle size: 80 mesh) available from Lehigh

Resin: PR12686 (cashew oil modified phenol resin) available from Sumitomo Bakelite Co., Ltd.

Oil: Diana Process NH-70S (aromatic process oil) available from Idemitsu Kosan Co., Ltd.

Antioxidant: NOCRAC RD (poly(2,2,4-trimethyl-1,2-dihydroquinoline)) available from Ouchi Shinko Chemical Industrial Co., Ltd.

Stearic acid: KIRI available from NOF Corporation

Zinc oxide: zinc oxide #2 available from Mitsui Mining & Smelting Co., Ltd.

Sulfur 1: powdered sulfur available from Tsurumi Chemical Industry Co., Ltd.

Sulfur 2: Crystex (oil-treated insoluble sulfur, containing 80% insoluble sulfur and 20% oil; the tables show the amount of the entire oil-treated insoluble sulfur containing oil) available from Flexsys

Vulcanization accelerator 1: NOCCELER NS (N-tert-butyl-2-benzothiazylsulfenamide, TBBS) available from Ouchi Shinko Chemical Industrial Co., Ltd.

Vulcanization accelerator 2: NOCCELER D (N,N'-diphenylguanidine, DPG) available from Ouchi Shinko Chemical Industrial Co., Ltd.

Vulcanization accelerator 3: NOCCELER H (hexamethylenetetramine, HMT) available from Ouchi Shinko Chemical Industrial Co., Ltd.

(Examples and Comparative Examples)

According to the formulation recipe shown in Table 1 or 2, the chemicals other than the sulfurs and vulcanization accelerators were kneaded for five minutes at 150°C using a 1.7 L Banbury mixer (Kobe Steel, Ltd.) to give a kneaded mixture. Then, the sulfur and vulcanization accelerator(s) were added to the kneaded mixture, and they were kneaded at 80°C for five minutes using an open roll mill to give an unvulcanized outer apex portion rubber composition or an unvulcanized inner apex portion rubber composition.

The unvulcanized outer apex portion rubber composition and unvulcanized inner apex portion rubber composition prepared as above were formed into the shape of a bead apex having a two-layer structure including an outer apex portion and an inner apex portion according to the specification shown in Table 3, and then assembled with other tire components to build an unvulcanized tire, which was then press-vulcanized at 150°C for 30 minutes to prepare a test tire (heavy duty tire, size: 11R22.5).

The test tires prepared as above were evaluated as follows. Table 3 shows the results.

<Viscoelastic testing>

A 20 mm long × 4 mm wide × 1 mm thick viscoelasticity measurement sample (vulcanized rubber) was collected from each of the outer and inner apex portions of the bead apex of each test tire in such a manner that the longer side of the sample was in the circumferential direction of the tire. The complex moduli $E_o^*$ (outer apex portion) and $E_i^*$ (inner apex portion) of each sample were measured using GABO EPLEXOR series under conditions including a temperature of 70°C, an initial strain of 5%, a dynamic strain of 1%, a frequency of 10 Hz, and an extension mode. Here, the thickness of each sample was in the radial direction of the tire.

<Durability>

The test tires were run at a speed of 20 km/h using a drum testing machine under conditions including a 8.25 × 22.5 rim, an internal pressure of 700 kPa, and a load of 26.72 kN × 2.5. The running time until damage occurred in the bead portion was determined and expressed as an index relative to that of Comparative Example 1 taken as 100. A higher index indicates higher durability.

[Table 1]

| | | Outer apex portion formulation | | | | | | | | | |
|---|---|---|---|---|---|---|---|---|---|---|---|
| | | A1 | A2 | A3 | A4 | A5 | A6 | A7 | A8 | B1 | B2 |
| Formulation (parts by mass) | NR | 100 | 90 | 80 | 100 | 80 | 100 | 70 | 100 | 100 | 70 |
| | SBR | | 10 | | | | | | | | 30 |
| | BR | | | 20 | | 20 | | 30 | | | |
| | Carbon black 1 | 40 | 40 | 50 | 40 | 40 | | | | 40 | |
| | Carbon black 2 | | | | | | 35 | 42 | 30 | | 73 |
| | Modified rubber material | 20 | 20 | 25 | 25 | 20 | 10 | 20 | 20 | | |
| | Reclaimed rubber (unmodified) | | | | | | | | | 20 | 10 |
| | Resin | | | | | | | | | | 5 |
| | Oil | 2.0 | 2.0 | 2.0 | 2.0 | 2.0 | 2.0 | 2.0 | 2.0 | 2.0 | 3.0 |
| | Antioxidant | 2.0 | 2.0 | 2.0 | 2.0 | 2.0 | 2.0 | 2.0 | 2.0 | 2.0 | 2.0 |
| | Stearic acid | 2.0 | 2.0 | 2.0 | 2.0 | 2.0 | 2.0 | 2.0 | 2.0 | 2.0 | 3.0 |
| | Zinc oxide | 3.0 | 3.0 | 3.0 | 3.0 | 3.0 | 3.0 | 3.0 | 3.0 | 3.0 | 4.0 |
| | Sulfur 1 | 2 | 2 | 2 | 2 | 2 | 2 | 2 | 2 | 2 | |
| | Sulfur 2 | | | | | | | | | | 4.0 |
| | Vulcanization accelerator 1 | 1 | 1 | 1 | 1 | 1 | 1 | 1 | 1 | 1 | 2.0 |
| | Vulcanization accelerator 2 | | | | | | | | | | 0.5 |
| $E_o^*$ (MPa) | | 4.5 | 4.8 | 6.0 | 4.7 | 4.8 | 4.2 | 5.3 | 3.2 | 4.2 | 32.5 |
| Modified rubber material/Isoprene-based rubber | | 0.20 | 0.22 | 0.31 | 0.25 | 0.25 | 0.10 | 0.29 | 0.20 | 0.00 | 0.00 |
| Carbon black/Modified rubber material | | 2.0 | 2.0 | 2.0 | 1.6 | 2.0 | 3.5 | 2.1 | 1.5 | – | – |

[Table 2]

| | | Inner apex portion formulation | | | | | |
|---|---|---|---|---|---|---|---|
| | | a1 | a2 | b1 | b2 | b3 | b4 |
| Formulation (parts by mass) | NR | 80 | 80 | 80 | 70 | 80 | 70 |
| | SBR | 20 | 20 | 20 | 30 | 20 | 30 |
| | BR | | | | | | |
| | Carbon black 1 | | | | | | |
| | Carbon black 2 | 70 | 65 | 75 | 76 | 65 | 75 |
| | Modified rubber material | 10 | 10 | | | | |
| | Reclaimed rubber (unmodified) | | | 10 | | | 10 |
| | Resin | | | 5 | | | |
| | Oil | 3.0 | 5.0 | 3.0 | 5.0 | 3.0 | 3.0 |
| | Antioxidant | 2.0 | 3.0 | 2.0 | 2.0 | 3.0 | 2.0 |
| | Stearic acid | 3.0 | 3.0 | 3.0 | 3.0 | 3.0 | 3.0 |
| | Zinc oxide | 4.0 | 4.0 | 4.0 | 4.0 | 4.0 | 4.0 |
| | Sulfur 1 | | | | | | |
| | Sulfur 2 | 4.0 | 4.0 | 4.0 | 5.5 | 4.0 | 5.5 |
| | Vulcanization accelerator 1 | 2.0 | 2.0 | 2.0 | 3.3 | 2.0 | 3.3 |
| | Vulcanization accelerator 3 | | | 0.5 | | | |
| Ei* (MPa) | | 18.0 | 14.0 | 30.5 | 22.0 | 13.0 | 23.0 |
| Modified rubber material/Isoprene-based rubber | | 0.13 | 0.13 | 0.00 | 0.00 | 0.00 | 0.00 |
| Carbon black/Modified rubber material | | 7.0 | 6.5 | – | – | – | – |

[Table 3]

| | Example 1 | Example 2 | Example 3 | Example 4 | Example 5 | Comparative Example 1 | Example 6 | Example 7 | Example 8 | Example 9 | Example 10 | Comparative Example 2 | Comparative Example 3 |
|---|---|---|---|---|---|---|---|---|---|---|---|---|---|
| Outer apex portion | A1 | A2 | A3 | A4 | A1 | B1 | A5 | A6 | A7 | A8 | A4 | B2 | B2 |
| Inner apex portion | a1 | a1 | a1 | a1 | a2 | b1 | b2 | b2 | b2 | b2 | b3 | b4 | b1 |
| Ei*/Eo* | 4.0 | 3.8 | 3.0 | 3.8 | 3.1 | 7.3 | 4.6 | 5.2 | 4.2 | 6.9 | 2.8 | 0.7 | 0.9 |
| Cant (Ei*/Eo*) | 10.0 | 10.7 | 16.7 | 10.4 | 12.9 | 5.5 | 8.7 | 6.7 | 10.1 | 4.4 | 14.5 | 103 | 77.8 |
| Cai/(Ei*/Eo*) | 17.5 | 18.7 | 23.3 | 18.3 | 20.9 | 10.3 | 16.6 | 14.5 | 18.3 | 11.1 | 23.5 | 106 | 79.9 |
| Durability | 170 | 166 | 161 | 157 | 155 | 100 | 179 | 184 | 166 | 164 | 161 | 71 | 76 |

Examples 3, 5, 9 and 10 are Reference Examples outside the scope of the claims but useful to understand the invention.

The tables show that the heavy duty tires of the examples were highly durable which included a bead apex rubber including an inner apex portion and an outer apex portion, and in which at least one selected from the group consisting of the inner apex portion and the outer apex portion contained an isoprene-based rubber, carbon black, and a modified rubber material functionalized with a thiuram sulfide compound, and the heavy duty tire satisfied relationships (1) and (2).

REFERENCE SIGNS LIST

2 tread portion
3 sidewall portion
4 bead portion
5 bead core
6 carcass
6A carcass ply
6a ply body portion
6b ply turnup portion
8 bead apex rubber
8A inner apex portion
8B outer apex portion
9 reinforcing cord layer
9a inner section
9b outer section

**Claims**

1. A heavy duty tire (1), comprising a bead apex rubber (8),

the bead apex rubber (8) comprising an inner apex portion (8A) and an outer apex portion (8B), **characterized in that** at least one selected from the group consisting of the inner apex portion (8A) and the outer apex portion (8B) comprises an isoprene-based rubber, carbon black, and a modified rubber material functionalized with a thiuram sulfide compound,
the heavy duty tire (1) satisfying the following relationships (1) and (2):

$$(1)\ E_i^* > E_o^*$$

$$(2)\ E_i^*/E_o^* \leq 7.0$$

wherein $E_i^*$ and $E_o^*$ represent complex moduli of the inner apex portion (8A) and the outer apex portion (8B), respectively, measured under conditions including a temperature of 70°C, an initial strain of 5%, a dynamic strain of 1%, a frequency of 10 Hz, and an extension mode,
wherein the heavy duty tire (1) satisfies the following relationship:

$$12.0 \geq Cao/(E_i^*/E_o^*) \geq 6.0$$

wherein Cao represents a carbon black content per 100 parts by mass of a rubber component content in the outer apex portion (8B), and $E_i^*/E_o^*$ is defined as above; and
wherein the heavy duty tire (1) satisfies the following relationship:

$$20.0 \geq Cai/(E_i^*/E_o^*) \geq 13.0$$

wherein Cai represents a carbon black content per 100 parts by mass of a rubber component content in the inner apex portion (8A), and $E_i^*/E_o^*$ is defined as above.

2. The heavy duty tire (1) according to claim 1,
   wherein at least one selected from the group consisting of the inner apex portion (8A) and the outer apex portion (8B) has a ratio of a modified rubber material content to an isoprene-based rubber content (modified rubber material content/isoprene-based rubber content) of 0.25 or less.

3. The heavy duty tire (1) according to claim 1 or 2,
   wherein at least one selected from the group consisting of the inner apex portion (8A) and the outer apex portion (8B) has a ratio of a carbon black content to a modified rubber material content (carbon black content/modified rubber material content) of 2.0 or more.

4. The heavy duty tire (1) according to any one of claims 1 to 3,
   wherein $E_i^*$ is 15.0 MPa or higher.


**Patentansprüche**

1. Schwerlastreifen (1), umfassend einen Wulstkernreitergummi (8),

   wobei der Wulstkernreitergummi (8) einen inneren Kernreiterabschnitt (8A) und einen äußeren Kernreiterabschnitt (8B) umfasst, **dadurch gekennzeichnet, dass** mindestens einer ausgewählt aus der Gruppe bestehend aus dem inneren Kernreiterabschnitt (8A) und dem äußeren Kernreiterabschnitt (8B) einen Gummi auf Isoprenbasis, Ruß und ein modifiziertes Gummimaterial, das mit einer Thiuramsulfidverbindung funktionalisiert ist, umfasst,
   wobei der Schwerlastreifen (1) die folgenden Beziehungen (1) und (2) erfüllt:

$$(1)\ E_i^* > E_o^*$$

$$(2)\ E_i^*/E_o^* \leq 7{,}0$$

   wobei $E_i^*$ und $E_o^*$ komplexe Moduli des inneren Kernreiterabschnitts (8A) bzw. des äußeren Kernreiterabschnitts (8B) darstellen, die unter Bedingungen gemessen wurden, die eine Temperatur von 70°C, eine anfängliche Dehnung von 5%, eine dynamische Dehnung von 1%, eine Frequenz von 10 Hz und einen Dehnungsmodus beinhalten,
   wobei der Schwerlastreifen (1) die folgende Beziehung erfüllt:

$$12{,}0 \geq Cao/(E_i^*/E_o^*) \geq 6{,}0$$

   wobei Cao einen Rußgehalt pro 100 Massenteile eines Gummikomponentengehalts im äußeren Kernreiterabschnitt (8B) darstellt und $E_i^*/E_o^*$ wie oben definiert ist; und
   wobei der Schwerlastreifen (1) die folgende Beziehung erfüllt:

$$20{,}0 \geq Cai/(E_i^*/E_o^*) \geq 13{,}0$$

   wobei Cai einen Rußgehalt pro 100 Massenteile eines Gummikomponentengehalts im inneren Kernreiterabschnitt (8A) darstellt und $E_i^*/E_o^*$ wie oben definiert ist.

2. Schwerlastreifen (1) nach Anspruch 1,
   wobei mindestens einer ausgewählt aus der Gruppe bestehend aus dem inneren Kernreiterabschnitt (8A) und dem äußeren Kernreiterabschnitt (8B) ein Verhältnis eines Gehalts an modifiziertem Gummimaterial zu einem Gehalt an Gummi auf Isoprenbasis (Gehalt an modifiziertem Gummimaterial/Gehalt an Gummi auf Isoprenbasis) von 0,25 oder weniger aufweist.

**3.** Schwerlastreifen (1) nach Anspruch 1 oder 2,
wobei mindestens einer ausgewählt aus der Gruppe bestehend aus dem inneren Kernreiterabschnitt (8A) und dem äußeren Kernreiterabschnitt (8B) ein Verhältnis eines Gehalts an Ruß zu einem Gehalt an modifiziertem Gummi (Gehalt an Ruß/Gehalt an modifiziertem Gummimaterial) von 2,0 oder mehr aufweist.

**4.** Schwerlastreifen (1) nach einem der Ansprüche 1 bis 3,
wobei $E_i^*$ 15,0 MPa oder höher ist.


**Revendications**

**1.** Pneu pour fortes charges (1), comprenant un caoutchouc de bourrage sur tringle (8),

le caoutchouc de bourrage sur tringle (8) comprenant une partie interne de bourrage sur tringle (8A) et une partie externe de bourrage sur tringle (8B), **caractérisé en ce qu'**au moins une partie choisie dans le groupe constitué par la partie interne de bourrage sur tringle (8A) et la partie externe de bourrage sur tringle (8B) comprend un caoutchouc à base d'isoprène, du noir de carbone, et un matériau en caoutchouc modifié fonctionnalisé avec un composé de sulfure de thiurame,
le pneu pour fortes charges (1) satisfaisant les relations (1) et (2) suivantes :

$$(1)\ E_i^* > E_o^*$$

$$(2)\ E_i^*/E_o^* \leq 7{,}0$$

dans lesquelles $E_i^*$ et $E_o^*$ représentent des modules complexes de la partie interne de bourrage sur tringle (8A) et de la partie externe de bourrage sur tringle (8B), respectivement, mesurés dans des conditions incluant une température de 70 °C, une déformation initiale de 5 %, une déformation dynamique de 1 %, une fréquence de 10 Hz, et un mode d'extension,
le pneu pour fortes charges (1) satisfaisant la relation suivante :

$$12{,}0 \geq \text{Cao}/(E_i^*/E_o^*) \geq 6{,}0$$

dans laquelle Cao représente une teneur en noir de carbone pour 100 parties en masse d'une teneur en composant à base de caoutchouc dans la partie externe de bourrage sur tringle (8B), et $E_i^*/E_o^*$ est défini comme ci-dessus ; et
le pneu pour fortes charges (1) satisfaisant la relation suivante :

$$20{,}0 \geq \text{Cai}/(E_i^*/E_o^*) \geq 13{,}0$$

dans laquelle Cai représente une teneur en noir de carbone pour 100 parties en masse d'une teneur en composant à base de caoutchouc dans la partie interne de bourrage sur tringle (8A), et $E_i^*/E_o^*$ est défini comme ci-dessus.

**2.** Pneu pour fortes charges (1) selon la revendication 1,
dans lequel au moins une partie choisie dans le groupe constitué par la partie interne de bourrage sur tringle (8A) et la partie externe de bourrage sur tringle (8B) a un rapport entre une teneur en matériau en caoutchouc modifié et une teneur en caoutchouc à base d'isoprène (teneur en matériau en caoutchouc modifié/teneur en caoutchouc à base d'isoprène) de 0,25 ou moins.

**3.** Pneu pour fortes charges (1) selon la revendication 1 ou 2,
dans lequel au moins une partie choisie dans le groupe constitué par la partie interne de bourrage sur tringle (8A) et la partie externe de bourrage sur tringle (8B) a un rapport entre une teneur en noir de carbone et une teneur en matériau en caoutchouc modifié (teneur en noir de carbone/teneur en matériau en caoutchouc modifié) de 2,0 ou moins.

4. Pneu pour fortes charges (1) selon l'une quelconque des revendications 1 à 3, dans lequel $E_i^*$ vaut 15,0 MPa ou plus.

FIG.1

# FIG.2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006196591 A1
- EP 0251145 A2
- US 2021061013 A1
- JP 6881627 B
- JP 2019026758 A
- JP 2009269961 A